# EUROPÄISCHE PATENTANMELDUNG

(11) **EP 1 208 769 A1**
(43) Veröffentlichungstag der Anmeldung: **29.05.2002**
(21) Anmeldenummer: 01127635.9
(22) Anmeldetag: 20.11.2001
(51) Int. Cl.: A47B 13/12, F21V 8/00, F21V 33/00, G09F 23/06

(54) **Tisch**

(30) Priorität: 28.11.2000 DE 20020208 U
(71) Anmelder: Langner, Olaf, 85051 Ingolstadt (DE)
(72) Erfinder: Langner, Olaf, 85051 Ingolstadt (DE)
(74) Vertreter: Neubauer, Hans-Jürgen, Dipl.-Phys.

(57) **Zusammenfassung**

Die Erfindung betrifft einen Tisch mit einer Tischplatte und wenigstens einer Standvorrichtung. Erfindungsgemäß ist die Tischplatte (2) aus einem mit einer Lichtquelle (10) durchleuchtbaren Material hergestellt, wobei die Tischplatte (2) mit wenigstens einem Motiv (3) versehen ist. Weiter ist die Tischplatte (2) randseitig im Bereich einer Tischplatten-Stirnseite (6) mit einer Einfassung (4; 30) versehen, wobei wenigstens eine Lichtquelle (10) zwischen der Stirnseite (6) und der Einfassung (4; 30) angeordnet ist, dergestalt dass sich das von der wenigstens einen Lichtquelle (10) in die Tischplattenebene hinein ausgesandte Licht (13) im Bereich des Motivs (3) bricht und das Motiv (3) ausleuchtet.

## Beschreibung

Die Erfindung betrifft einen Tisch nach dem Oberbegriff des Anspruchs 1.

Der Aufbau eines Tisches ist allgemein bekannt, wobei ein herkömmlicher Tisch eine Tischplatte und wenigstens eine Standvorrichtung umfasst. Es gibt verschiedene Arten von Tischen, so z. B. einen Stehtisch mit einer vorzugsweise kreisrunden Tischplatte und einer zentral darunter angeordneten, als Tischbein ausgebildeten Standvorrichtung. Derartige Stehtische können z. B. als Bistro-Stehtische oder z. B. als Stehtische auf Messeständen verwendet werden. Das Tischbein ist hier beispielsweise aus Metall, während die Tischplatte z. B. aus marmoriertem Stein besteht. Ferner gibt es demgegenüber größere Tische, z. B. großflächige Konferenztische, die eine Tischplatte und mehrere Tischbeine als Standvorrichtungen aufweisen. Diese Tische können aus unterschiedlichen Materialien hergestellt sein, so z. B. in traditioneller Weise ganz aus Holz. Alternativ dazu sind aber auch Tische aus Metall oder mit einer Glastischplatte bekannt. Eine derartige Glastischplatte ruht in der Regel auf einem Tischgestell als Standvorrichtung, wobei dieses Tischgestell wiederum aus unterschiedlichen Materialien hergestellt sein kann. Derartige herkömmliche Tische weisen lediglich eine Funktion als Tafelmöbel auf, das zum Essen, Arbeiten oder als Ablage verwendet werden kann.

Ferner ist es bekannt, einen blockförmigen Glaskörper mit einem Motiv zu versehen, wobei auf einer dem Motiv gegenüberliegenden Seite des Glaskörpers eine Lichtquelle als Beleuchtungseinrichtung angeordnet ist, die das Motiv von hinten her unter Lichtdurchtritt von der Lichtquelle durch den Glaskörper beleuchtet. Ein derartiger beleuchteter Glaskörper mit Motiv hat lediglich eine Funktion als Werbeträger und kann keiner weiteren Verwendung zugeführt werden. Eine irgendwie geartete Assoziation mit einem Tisch geht von einem derartigen Glaskörper nicht aus.

Aufgabe der Erfindung ist es, einen Tisch zu schaffen, der zusätzlich neben seiner herkömmlichen Funktion auch als Werbeträger verwendet werden kann sowie einen qualitativ hochwertigen Aufbau mit hochwertigem optischen Gesamteindruck vermittelt.

Diese Aufgabe wird gelöst mit den Merkmalen des Anspruchs 1.

Gemäß Anspruch 1 ist die Tischplatte aus einem mit einer Lichtquelle durchleuchtbaren Material hergestellt, wobei die Tischplatte mit wenigstens einem Motiv versehen ist. Weiter ist die Tischplatte randseitig mit einer Einfassung im Bereich einer Tischplatten-Stirnseite versehen, wobei wenigstens eine Lichtquelle zwischen der Stirnseite und der Einfassung angeordnet ist, so dass sich das von der wenigstens einen Lichtquelle in die Tischplattenebene hinein ausgesandte Licht im Bereich des Motivs bricht und das Motiv ausleuchtet.

Vorteilhaft wird mit einem derartigen erfindungsgemäßen Aufbau ein Tisch zur Verfügung gestellt, der einerseits in seiner herkömmlichen Funktion z. B. zum Essen, zum Arbeiten oder als Ablage dienen kann und der zudem auch noch in einer weiteren Funktion als hochwertiger Licht-Werbeträger fungieren kann. Durch die Verwendung einer Tischplatte aus einem mit einer Lichtquelle durchleuchtbaren Material kann eine einen besonders qualitativ hochwertigen optischen Gesamteindruck vermittelnde Lichtwerbung erfolgen, indem im stirnseitigen Randbereich der Tischplatte wenigstens eine Lichtquelle angeordnet ist, die von dieser Stirnseite her die Tischplatte durchleuchtet, z. B. in einer roten Farbe, so dass im Bereich des auf die Tischplatte aufgebrachten wenigstens einen Motives eine Lichtbrechung erfolgt, die das Motiv ausleuchtet und damit scheinen lässt. Damit wird ein vorteilhafter optischer Effekt, z. B. in Verbindung mit einem Werbemotiv, erreichbar, der dem Betrachter sofort ins Auge springt und den Blick unweigerlich auf den Tisch richtet. Grundsätzlich können dabei neben oder anstelle von Werbemotiven aber auch andere Bildmotive verwendet werden, je nach den Wünschen und Erfordernissen der Tischbenutzer, so dass ein derartiger Tisch ggf. als Lichtkunstwerk für einen besonderen optischen Effekt verwendet werden kann.

Bei dem erfindungsgemäßen Aufbau können die Lichtquellen ferner relativ unauffällig zwischen der Einfassung und der Tischplatte im Bereich der Stirnseite angeordnet werden, so dass die Lichtquelle als solche den optischen Gesamteindruck nicht beeinträchtigt. Vorzugsweise ist die Lichtquelle dabei formschlüssig im Bereich zwischen der Stirnseite der Tischplatte und der Einfassung eingesetzt.

Während es in einer besonders bevorzugten Ausführungsform vorgesehen ist, dass die Tischplatte als Ganzes aus einem mit einer Lichtquelle durchleuchtbaren Material hergestellt ist, ist es jedoch gemäß Anspruch 2 grundsätzlich auch möglich, dass die durchleuchtbare Tischplatte lediglich einen Tischplatten-Teilbereich einer insgesamt größeren Tischplatte bildet. Dies kann z. B. der Fall sein, wenn in einer herkömmlichen Tischplatte, z. B. aus Holz, beispielsweise in einem mittleren Bereich der Tischplatte ein Tischplatten-Teilbereich aus einem derartigen mit einer Lichtquelle durchleuchtbaren Material integriert ist. Die Einfassung wird hier dann beispielsweise durch den an diesen durchleuchtbaren Tischplatten-Teilbereich angrenzenden Randbereich der Resttischplatte gebildet, in den z. B. zusätzlich auch noch ein separates Bauteil als Einfassung integriert sein kann. Weitere Variationen in dieser Hinsicht sind ebenfalls möglich, so z. B. dass bei einer Tischplatte eine Hälfte aus einem mit einer Lichtquelle durchleuchtbaren Material hergestellt ist, während die andere Tischplatte aus einem anderen Material, z. B. Holz oder Metall, hergestellt ist. Gemäß der Erfindung ist es hierbei erforderlich, dass stets der aus einem mit einer Lichtquelle durchleuchtbaren Material hergestellte Tischplatten-Teilbereich mit einer Einfassung versehen ist, wobei zwischen der Einfassung und einer Stirnseite des Tischplatten-Teilbereichs wenigstens eine Lichtquelle angeordnet ist.

Gemäß Anspruch 3 kann die Einfassung durch eine L-förmige Winkelleiste gebildet sein, wobei ein erster L-Schenkel die Stirnseite mitsamt davor angeordneter Lichtquelle und ein zweiter L-Schenkel den Randbereich der Tischplatte in einer Anlageverbindung von oben her abdeckt. Vorteilhaft wird mit einem derartigen Aufbau eine Lichtbündelung in Richtung in die Tischplattenebene hinein erreicht, so dass sich eine besonders effektive Ausleuchtung im Bereich des wenigstens einen Motivs einstellen lässt.

In einer hierzu alternativen, besonders bevorzugten Ausführungsform ist die Einfassung gemäß Anspruch 4 durch eine U-förmige Winkelleiste gebildet, deren U-Basis die Stirnseite mitsamt der davor angeordneten Lichtquelle abdeckt und deren Schenkel den Randbereich der Tischplatte umgreifen und abdecken. Vorzugsweise umgreift die U-förmige Winkelleiste dabei den Randbereich der Tischplatte mitsamt der im Bereich der Stirnseite angeordneten wenigstens einen Lichtquelle formschlüssig, wodurch sich eine besonders stabile und sichere Verankerung der Tischplatte in der Einfassung ergibt. Zudem kann mit einem derartigen Aufbau auch eine besonders einfache Anordnung der Lichtquelle erzielt werden, in dem diese einfach in die durch die U-Schenkel gebildete Aufnahme der Winkelleiste einstzbar und dort anordenbar ist. Weiter ist hierbei vorteilhaft, dass sich hierdurch eine gezielte Bündelung und Ausrichtung des von den oder der einzelnen Lichtquelle ausgestrahlten Lichts in die Tischplattenebene hinein ergibt. Dies hat wiederum eine besonders vorteilhafte Ausleuchtung der Tischplatte und insbesondere des Motivbereichs zur Folge, so dass mit einem derartigen Aufbau ein besonders vorteilhafter, sowohl qualitativ als auch optisch hochwertig wirkender Gesamteindruck erzielbar ist.

Grundsätzlich gibt es verschiedene Möglichkeiten, die Lichtquelle auszubilden. Dies kann beispielsweise durch herkömmliche Leuchten geschehen. Gemäß einer besonders bevorzugten Ausführungsform gemäß Anspruch 5 ist jedoch vorgesehen, dass die Lichtquelle durch eine Mehrzahl von auf einer Leiste angeordneten Leuchtdioden (LED) gebildet ist, die gegenüber herkömmlichen Leuchten eine Reihe besonderer allgemein bekannter Vorteile aufweisen, von denen beispielhaft lediglich die hohe Lebensdauer bei geringem Stromverbrauch erwähnt werden soll.

In einer ersten konkreten Ausführungsform gemäß Anspruch 6 ist vorgesehen, dass die Leiste um den gesamten Tischplattenumfang herum angeordnet ist, so dass sich eine umfangsseitige gleichmäßige Abstrahlung von Licht in die Tischplattenebene hinein ergibt. Alternativ dazu ist es gemäß Anspruch 7 aber auch möglich, dass die Leiste wenigstens in einem Teilbereich des Tischplattenumfangs angeordnet ist, wobei in einer bevorzugten Ausführungsform hierzu gemäß Anspruch 8 vorgesehen ist, dass wenigstens zwei Leisten beabstandet voneinander, vorzugsweise in etwa gegenüberliegend, am Tischplattenumfang angeordnet sind. Damit lässt sich eine vorteilhafte und an die jeweiligen individuellen Wünsche ausgerichtete Ausleuchtung einer Tischplatte in Verbindung mit einzelnen darauf aufgebrachten Motiven erzielen.

Grundsätzlich ist es möglich, dass der Tisch als herkömmlicher Tisch mit einer großflächigen Tischplatte ausgebildet ist. In einer besonders bevorzugten Ausführungsform gemäß Anspruch 9 ist der Tisch jedoch als Stehtisch, z. B. als Bistro-Stehtisch oder Messestand-Stehtisch, ausgebildet mit einem vorzugsweise zentralen Tischbein als Standvorrichtung, wobei dieses Tischbein vorzugsweise durch ein Rohr gebildet ist, dass einen z. B. kreisrunden Rohrquerschnitt aufweist. Von diesem oberen Ende des Tischbeins können wenigstens zwei Tragarme nach oben geführt sein, die die Tischplatte abstützen.

Bei einem derartigen Stehtisch können z. B. verschiedenste Motive, wie z. B. eine Speisekarte, Firmenwerbung, Designmotive, etc., die sich ggf. harmonisch in ein wiederkehrendes Gestaltungselement der Innenraumausstattung eingliedern, und zwar im Sinne einer qualitativ besonders hochwertig wirkenden Lichtwerbung und/oder eines künstlerischen Lichteffekts. In Verbindung mit einem Stehtisch für die Verwendung auf Messen können z. B. speziell auf eine bestimmte Firma oder ein bestimmtes Messeangebot abgestimmte Motive in ansprechender und die Aufmerksamkeit auf sich ziehender Weise dem Betrachter vermittelt werden. Ein derartiger Stehtisch hat zudem den Vorteil, dass dieser einfach transportabel ist und somit schnell und ohne großen Aufwand an verschiedensten Orten aufgestellt und verwendet werden kann.

Gemäß einer besonders bevorzugten, konkreten Ausführungsform sind nach Anspruch 10 zwei vorzugsweise einen Rohrquerschnitt aufweisende Tragarme vorgesehen, die in etwa in einer gleichen Vertikalebene liegen und als Gleichteile ausgebildet sind, so dass die beiden Tragarme zusammen in etwa U-förmig nach oben zur Tischplatte geführt sind. Mit einem derartigen Aufbau des Stehtisches ergibt sich ein besonders harmonischer Gesamteindruck.

Grundsätzlich ist es dabei auch möglich, dass sich die Standvorrichtung an der Tischplatte selbst abstützt. Gemäß einer besonders bevorzugten Ausführungsform ist jedoch nach Anspruch 11 vorgesehen, dass sich die wenigstens eine Standvorrichtung mittelbar und/oder unmittelbar an der Einfassung selbst abstützt und dort festgelegt ist. Dadurch ist vorteilhaft eine ggf. bei der Abstützung auf der Tischplatte einhergehende Beschädigung der Tischplatte, insbesondere einer Glas-Tischplatte als solches vermeidbar. Zudem wird hier die Einfassung in einer vorteilhaften Doppelfunktion auch gleichzeitig neben ihrer herkömmlichen Funktion als Einfassung des Tischplattenrands auch als Befestigungsmittel zur Festlegung der Standvorrichtung verwendet. Damit werden die ohnehin vorhandenen Bauteile in einer vorteilhaften Funktionsintegration in mehrfacher Weise verwendet, was insbesondere die Bauteilevielfalt reduziert.

Eine besonders stabile Anbindung der Standvorrichtung an der Einfassung ergibt sich nach Anspruch 12 über Befestigungsflansche, die vorzugsweise an einem unteren U-Schenkelbereich einer im Querschnitt U-förmigen Winkelleiste als Einfassung festgelegt sind.

Eine besonders vorteilhafte, den optischen Gesamteindruck nicht störende Anordnung einer Leitung zur Stromversorgung der Lichtquelle verläuft gemäß Anspruch 13 in der Standvorrichtung, z. B. innerhalb des Rohrquerschnitts eines Tischbeins eines Stehtisches, wobei diese elektrische Leitung einerseits mit der Lichtquelle und andererseits mit einer Stromversorgungseinheit gekoppelt ist.

Eine besonders vorteilhafte, stromnetzunabhängige Ausleuchtung der Tischplatte ergibt sich dann, wenn die Stromversorgungseinheit gemäß Anspruch 14 durch eine in die Standvorrichtung integrierte Batterieanordnung gebildet ist, die vorzugsweise in einem Batteriegehäuse aufgenommen ist. Eine vorteilhafte Batterieanordnung ist dabei z. B. in einer konkreten Ausführungsform durch einen Bleigelakkumulator gegeben. Alternativ dazu kann aber auch ein Nickelmetallhydridakkumulator verwendet werden. Die Verwendung eines Batteriegehäuses, z. B. im unteren Bereich des Tischbeins eines Stehtisches ist besonders vorteilhaft, da ein derartiges Batteriegehäuse besonders vorteilhaft in den Gesamtaufbau des Tisches und insbesondere des Tischbeins integriert werden kann, ohne dass die ursprüngliche Funktion des Batteriegehäuses sofort bzw. überhaupt erkennbar wäre. Ein weiterer besonderer Vorteil bei der Verwendung einer derartigen Batterieanordnung liegt darin, dass eine Unabhängigkeit von einem Stromnetz gegeben ist, so dass insbesondere der Transport eines derartigen Stehtisches und die sofortige Betriebsbereitschaft gegeben ist, ohne dass hierfür ggf. aufwendige Maßnahmen zur Stromversorgung über Kabel, etc. getroffen werden muss.

Gemäß Anspruch 15 bildet bei einem Stehtisch mit einem Tischbein als Standvorrichtung das Batteriegehäuse vorteilhaft ein unteres Sockelteil, so dass dieser untere Bereich aufgrund des relativ hohen Gewichts der Batterieanordnung für eine sehr gute und stabile Standfestigkeit des Stehtisches insgesamt vorteilhaft schwer ausgebildet werden kann.

Eine besonders vorteilhafte Wartung der Batterieanordnung ist mit Anspruch 16 dann möglich, wenn über eine vorzugsweise verschließbare Wartungsklappe und/oder Wartungstüre im Batteriegehäuse die Batterieanordnung in der Standvorrichtung zugänglich ist.

Alternativ dazu ist aber grundsätzlich auch eine Stromversorgung extern über einen Netzanschlussstecker möglich, wie dies mit Anspruch 17 beansprucht ist.

Die Standfläche des Tischbeins bzw. der Standvorrichtung kann grundsätzlich variabel gestaltet sein. Ein besonders stabiler und fester Stand ergibt sich gemäß Anspruch 18, wenn am unteren Tischbein eines Stehtisches eine flächige Platte als Aufstandsplatte angeordnet ist. Alternativ dazu kann aber auch in diesem unteren Tischbeinbereich eine Anordnung von Tischfüßen, vorzugsweise von drei Stützfüßen, die jeweils voneinander beabstandet sind, vorgesehen sein.

Eine besonders vorteilhafte Höhenverstellung und -anpassung des Tisches an unterschiedliche Situationen ergibt sich gemäß Anspruch 19, wenn das Tischbein teleskopartig aus wenigstens zwei Teleskoprohrteilen aufgebaut ist. Gemäß einer weiteren, besonders bevorzugten konkreten Ausführungsform ist die Tischplatte gemäß Anspruch 20 aus Glas, vorzugsweise aus Acrylglas und/oder relativ kratzfestem Hartglas und/oder relativ krastzfestem Sicherheitsglas als durchsichtigem Material ausgebildet. Alternativ dazu kann aber auch ein Kunststoffmaterial verwendet sein.

Das Motiv ist gemäß Anspruch 21 vorteilhaft auf einer in einer Gebrauchsstellung oberen Seite der Tischplatte aufgebracht, wodurch sich ein besonders ansprechender optischer Gesamteindruck bei der Ausleuchtung des Motivs erzielen lässt.

Das wenigstens eine Motiv kann dabei gemäß Anspruch 22 in die Tischplatte eingefräst oder durch Bedrucken auf die Tischplatte aufgebracht werden. Bevorzugt wird das Motiv dabei durch ein Siebdruckverfahren aufgebracht.

Die Tischplatte ist dabei gemäß Anspruch 23, vorzugsweise nach dem Aufbringen des Motivs, oberflächen- und/oder kratzvergütet. Insbesondere durch diese Kratzvergütung der Tischplatte, vorzugsweise einer Glas-Tischplatte aus z. B. Acryl, ist sichergestellt, dass die Tischplatte besonders gut gegen Verkratzen geschützt ist und somit lediglich in dem Bereich ausgeleuchtet wird, in dem das wenigstens eine Motiv aufgebracht ist. Denn durch sich in der Tischplatte befindlichen Kratzer oder dergleichen findet ebenfalls eine Lichtbrechung des in die Tischplattenebene hinein ausgesandten Lichts statt, so dass unerwünschte und den optischen Gesamteindruck störende Lichtnebeneffekte auftreten könnten.

Gemäß Anspruch 24 kann die Einfassung und/oder die wenigstens eine Standvorrichtung aus Messing und/oder Aluminium und/oder Stahl, vorzugsweise aus Edelstahl, ggf. unter Verzinken hergestellt und/oder beschichtet sein. Damit lassen sich besonders hochwertige Tische ausbilden.

Sofern die Batterie z. B. mit einer Zeitschaltung gemäß Anspruch 25 versehen wird, kann eine Ausleuchtung des Motivs in genau vorgegebenen Zeitintervallen erreicht werden. Eine derartige Zeitschaltvorrichtung ist grundsätzlich aber auch mit einem Netzanschluss möglich. Insbesondere ist dabei jedoch auch ein optimierter Energieverbrauch möglich, was besonders bei einer Batterieanordnung von Vorteil ist.

Die Erfindung wird nachfolgend anhand einer Zeichnung näher erläutert.

Es zeigen:
- Fig. 1: eine schematische, perspektivische Ansicht eines Stehtisches,
- Fig. 2: eine schematische Seitenansicht einer alternativen Ausführungsform des Stehtisches gemäß Fig. 1,
- Fig. 3: eine schematische Querschnittsansicht entlang der Linie A-A der Fig. 1,
- Fig. 4: eine alternative, schematische Querschnittsansicht der Ausgestaltung nach Fig. 3, und

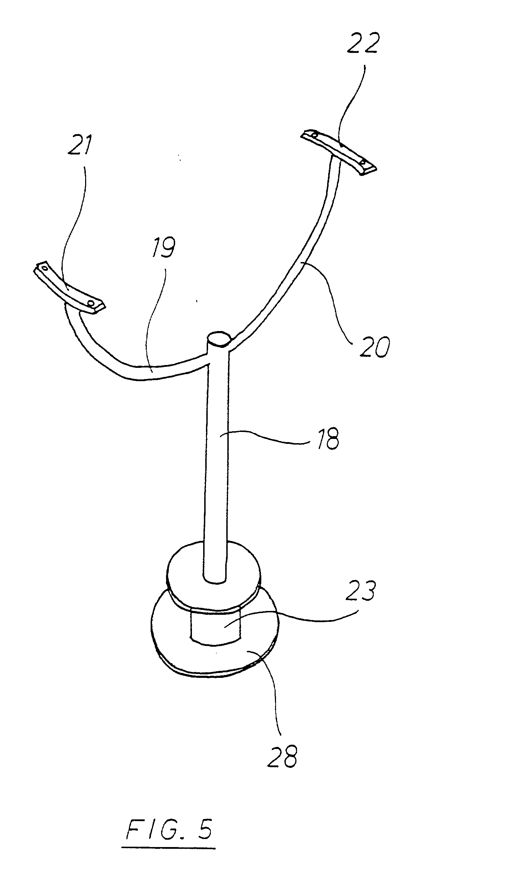

- Fig. 5: eine schematische, perspektivische Ansicht der Standvorrichtung gemäß Fig. 1.

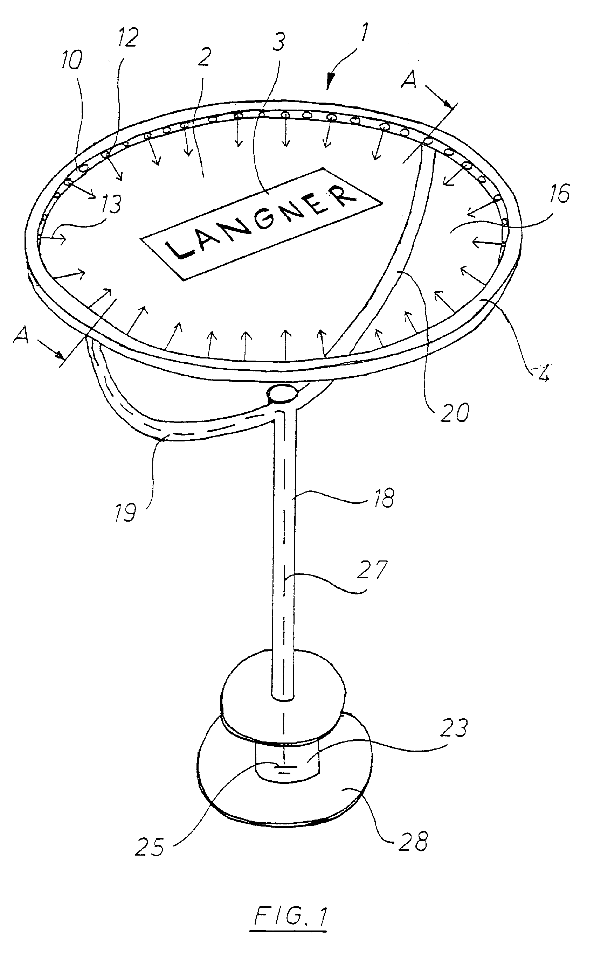

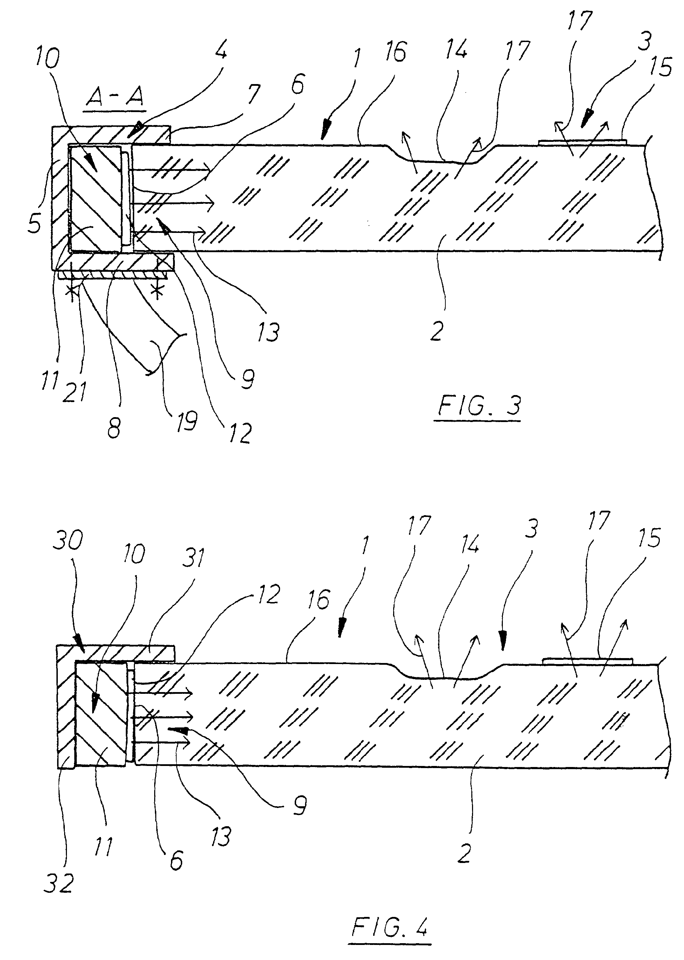

In der Fig. 1 ist schematisch und perspektivisch ein Stehtisch 1 dargestellt, der eine Tischplatte 2 aus z. B. Glas, vorzugsweise aus einem vergüteten, kratzfesten Acrylglas, aufweist. Auf diese Tischplatte 2 ist vor dem Vergüten ein Werbemotiv 3 aufgebracht worden, z. B. im Siebdruckverfahren. Die Tischplatte 2 ist randseitig mit einer Einfassung 4 versehen, wie dies insbesondere aus der Fig. 3 ersichtlich ist, die einen schematischen Längsschnitt entlang der Linie A-A der Fig. 1 zeigt.

Die Einfassung 4 ist hier als eine einen U-förmigen Querschnitt aufweisende Winkelleiste ausgebildet, deren U-Basis 5 eine Stirnseite 6 der Tischplatte 2 und deren oberer U-Schenkel 7 und unterer U-Schenkel 8 den Randbereich 9 der Tischplatte formschlüssig umgreifen und abdecken.

Den Fig. 1 und 3 kann zudem weiter entnommen werden, dass zwischen der Einfassung 4 und der Stirnseite 6 der Tischplatte eine Lichtquelle 10 bündig und formschlüssig aufgenommen ist, die durch eine Mehrzahl von auf einer Leiste 11 angeordneten Leuchtdioden 12 gebildet ist. Durch die Ausbildung der Einfassung 4 als U-förmige Winkelleiste wird erreicht, dass das von den Leuchtdioden 12 abgestrahlte Licht 13 gebündelt in die Tischplattenebene hinein abgestrahlt wird, wie dies in den Fig. 1 und 3 äußerst schematisch dargestellt ist.

Das Motiv 3 kann, wie dies insbesondere aus der Fig. 3 ersichtlich ist, zum Teil durch eine Einfräsung 14 oder eine Bedruckung 15 im Siebdruckverfahren auf einer Oberseite 16 der Tischplatte 2 ausgebildet sein. Wie dies in der Fig. 3 weiter lediglich äußerst schematisch eingezeichnet ist, wird das von den Leuchtdioden 12 ausgesandte Licht 13 im Bereich der Bedruckung 15 und der Einfräsung 14 gebrochen, so dass im Bereich des Motives 3 Lichtstrahlen 17 nach oben hin abgelenkt werden, wodurch das Motiv 3 in optisch besonders hochwertiger und ansprechender Weise ausgeleuchtet wird, so dass der optische Eindruck eines auf der Tischplatte 2 aufgebrachten beleuchteten Motivs entsteht. Die Leuchtdioden 12 können dabei sämtliche Buntfarben aufweisen inkl. einer weißen Farbe.

Wie dies insbesondere aus der Fig. 1 ersichtlich ist, ist die Leiste 11 mitsamt den Leuchtdioden 12 um den gesamten Tischplattenumfang herum angeordnet.

Als Standvorrichtung weist der Stehtisch 1 ein zentrales Tischbein 18 auf, dass durch ein einen vorzugsweise kreisrunden Querschnitt aufweisenden Rohrabschnitt gebildet ist. Vom oberen Ende des Tischbeins 18 gehen zwei in einer gleichen Vertikalebene liegende und als Gleichteile ausgebildete, ebenfalls vorzugsweise einen Rohrquerschnitt aufweisende Tragarme 19, 20 aus, die vom oberen Tischbeinbereich ausgehend in etwa U-förmig nach oben zur Tischplatte geführt sind und sich im Bereich der Einfassung 4 abstützen, wie dies insbesondere auch aus der Fig. 3 ersichtlich ist. Für eine stabile Auflage und Abstützung der Tischplatte 2 über die Tragarme 19 und 20 ist endseitig an den Tragarmen 19, 20 jeweils ein Befestigungsflansch 21, 22 angeordnet, wie dies insbesondere aus der Fig. 4 ersichtlich ist, die den Stehtisch 1 ohne die Tischplatte 2 zeigt. Die Einfassung 4 ist, wie dies aus der Fig. 3 ersichtlich ist, im Bereich des unteren U-Schenkels 8 der Einfassung 4 mit dem Befestigungsflansch 21 und dem Befestigungsflansch 22 verschraubt, was in der Darstellung der Fig. 3 lediglich für den Befestigungsflansch 21 schematisch gezeigt ist.

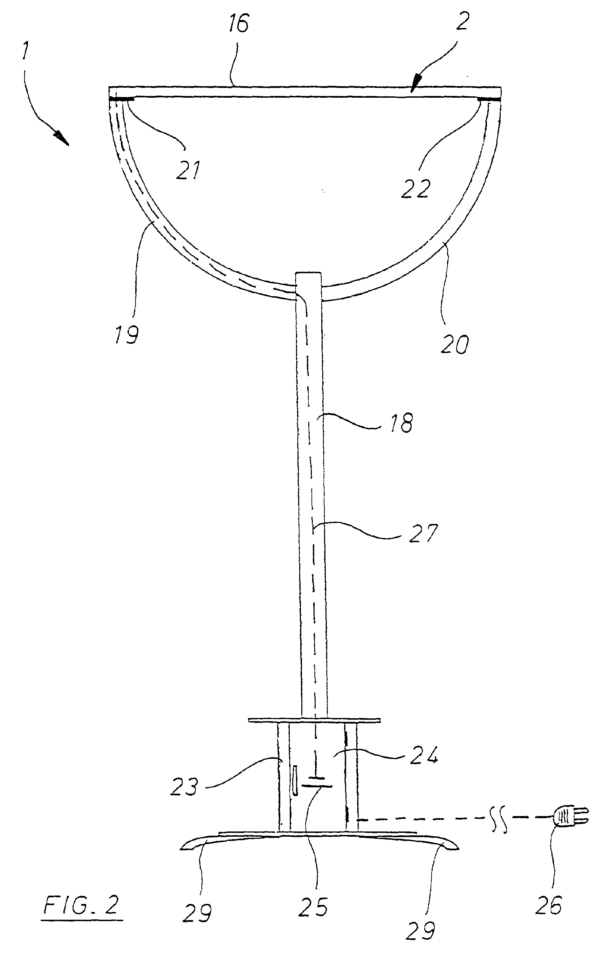

Im unteren Bereich des Tischbeins 18 ist ein die Standfestigkeit erhöhendes Sockelteil als Batteriegehäuse 23 ausgebildet, das eine verschließbare Wartungstür 24 aufweist. Über diese Wartungstür 24 ist ein Zugang zum Innenraum des Batteriegehäuses 23 möglich, in dem eine Batterieanordnung 25, z. B. ein Bleigelakkumulator oder ein Nickelmetallhydridakkumulator, aufgenommen ist, was in der Darstellung der Fig. 2 lediglich schematisch dargestellt ist. Alternativ zu der Anordnung eines Batteriegehäuses 23 mit darin enthaltener Batterieanordnung 25 kann aber auch ein Netzanschluss über einen hier lediglich schematisch dargestellten Netzanschlussstecker 26 vorgesehen sein.

Wie dies aus den Fig. 1 und 2 weiter ersichtlich ist, ist von der Batterieanordnung 25 ausgehend eine elektrische Leitung 27 über das Tischbein 18 und den Tragarm 19 nach oben zur Lichtquelle 10 und damit den Leuchtdioden 12 geführt.

Für einen stabilen Aufstand auf dem Boden als Aufstandsfläche kann am unteren Ende des Tischbeins 18 entweder in herkömmlicher Weise eine Abstützplatte 28, wie diese in der Fig. 1 gezeigt ist, angeordnet sein oder können, wie dies alternativ dazu in der Fig. 2 gezeigt ist, mehrere Stützfüße 29 vorgesehen sein.

In der Fig. 4 ist eine alternative Darstellung eines Querschnitts durch eine Tischplatte 2 gezeigt, bei der eine Einfassung 30 als eine ein L-Querschnittsprofil aufweisende Winkelleiste ausgebildet ist, dessen erster L-Schenkel 31 den Randbereich mitsamt vor der Stirnseite 6 der Tischplatte 2 angeordneter Lichtquelle 10 von oben her in einer Anlageverbindung formschlüssig abdeckt, während der zweite L-Schenkel 32 die Stirnseite 6 mitsamt davor angeordneter Lichtquelle 10 vom Stirnseitenbereich her formschlüssig abdeckt. Die Abstützung der Tischplatte kann auch hier wieder über die Einfassung 30 erfolgen, was hier allerdings nicht dargestellt ist. Da auch bei einem derartigen Aufbau der Einfassung 30 die Funktionsweise identisch mit derjenigen der ersten Ausführungsform gemäß Fig. 3 ist, wird hierauf nicht mehr näher eingegangen.

## Patentansprüche

1. Tisch mit einer Tischplatte und wenigstens einer Standvorrichtung,
**dadurch gekennzeichnet,**
**dass** die Tischplatte (2) aus einem mit einer Lichtquelle (10) durchleuchtbaren Material hergestellt ist,
**dass** die Tischplatte (2) mit wenigstens einem Motiv (3) versehen ist,
**dass** die Tischplatte (2) randseitig im Bereich einer Tischplatten-Stirnseite (6) mit einer Einfassung (4; 30) versehen ist, und
**dass** wenigstens eine Lichtquelle (10) zwischen der Stirnseite (6) und der Einfassung (4; 30) angeordnet ist, dergestalt
**dass** sich das von der wenigstens einen Lichtquelle (10) in die Tischplattenebene hinein ausgesandte Licht (13) im Bereich des Motivs (3) bricht und das Motiv (3) ausleuchtet.

2. Tisch nach Anspruch 1, **dadurch gekennzeichnet,**
**dass** die durchleuchtbare Tischplatte (2) durch einen Tischplatten-Teilbereich einer insgesamt größeren Tischplatte gebildet ist, und
**dass** dieser Tischplatten-Teilbereich mit der Einfassung randseitig im Bereich der Stirnseite versehen ist.

3. Tisch nach Anspruch 1 oder Anspruch 2, **dadurch gekennzeichnet, dass** die Einfassung (30) durch eine einen L-förmigen Querschnitt aufweisende Winkelleiste gebildet ist, deren erster L-Schenkel (31) die Stirnseite (6) mitsamt davor angeordneter Lichtquelle (10) und deren zweiter L-Schenkel (32) den Randbereich (9) der Tischplatte (2) in einer Anlageverbindung von oben her abdeckt.

4. Tisch nach Anspruch 1 oder Anspruch 2, **dadurch gekennzeichnet, dass** die Einfassung (4) durch eine einen U-förmigen Querschnitt aufweisende Winkelleiste gebildet ist, deren U-Basis (5) die Stirnseite (6) mitsamt davor angeordneter Lichtquelle (10) abdeckt und deren oberer und unterer U-Schenkel (7, 8) den Randbereich (9) der Tischplatte (2) umgreift und abdeckt.

5. Tisch nach einem der Ansprüche 1 bis 4, **dadurch gekennzeichnet, dass** die Lichtquelle (10) durch eine Mehrzahl von auf einer Leiste (11) angeordneten Leuchtdioden (12) gebildet ist.

6. Tisch nach Anspruch 5, **dadurch gekennzeichnet, dass** die Leiste (11) um den gesamten Tischplattenumfang herum angeordnet ist.

7. Tisch nach Anspruch 4, **dadurch gekennzeichnet, dass** die Leiste wenigstens in einem Teilbereich des Tischplattenumfangs angeordnet ist.

8. Tisch nach Anspruch 7, **dadurch gekennzeichnet, dass** wenigstens zwei Leisten beabstandet voneinander, vorzugsweise in etwa gegenüberliegend, am Tischplattenumfang angeordnet sind.

9. Tisch nach einem der Ansprüche 1 bis 8, **dadurch gekennzeichnet,**
**dass** der Tisch als Stehtisch (1) mit einem vorzugsweise einen Rohrquerschnitt aufweisenden Tischbein (18) als Standvorrichtung ausgebildet ist, und
**dass** vom oberen Ende des Tischbeins (18) wenigstens zwei Tragarme (19, 20) nach oben geführt sind, die die Tischplatte (2) abstützen.

10. Tisch nach Anspruch 9, **dadurch gekennzeichnet,**
**dass** zwei vorzugsweise einen Rohrquerschnitt aufweisende Tragarme (19, 20) vorgesehen sind, die in etwa in einer gleichen Vertikalebene liegen und als Gleichteile ausgebildet sind, und
**dass** die beiden Tragarme (19, 20) zusammen in etwa U-förmig nach oben zur Tischplatte (2) geführt sind.

11. Tisch nach einem der Ansprüche 1 bis 10, **dadurch gekennzeichnet, dass** sich die wenigstens eine Standvorrichtung (18, 19, 20) mittelbar und/oder unmittelbar an der Einfassung (4; 30) abstützt und dort festlegbar ist.

12. Tisch nach Anspruch 11, **dadurch gekennzeichnet, dass** die wenigstens eine Standvorrichtung (18, 19, 20) über an Tragarmen (19, 20) endseitig angeordnete Befestigungsflansche (21, 22) an der Einfassung (4), vorzugsweise an einem unteren U-Schenkelbereich einer im Querschnitt U-förmigen Winkelleiste als Einfassung (4), festgelegt ist.

13. Tisch nach einem der Ansprüche 1 bis 12, **dadurch gekennzeichnet, dass** in der Standvorrichtung (18, 19, 20) eine Leitung (27) zur Stromversorgung der Lichtquelle (10) verlegt ist, die mit einer Stromversorgungseinheit (25) einerseits und mit der Lichtquelle (10) andererseits gekoppelt ist.

14. Tisch nach Anspruch 13, **dadurch gekennzeichnet,**
**dass** die Stromversorgungseinheit durch eine in die Standvorrichtung (18, 19, 20) integrierte Batterieanordnung (25), vorzugsweise einen Bleigelakkumulator oder einen Nickelmetallhydridakkumulator, gebildet ist, und
**dass** die Batterieanordnung (25) vorzugsweise in einem Batteriegehäuse (23) aufgenommen ist.

15. Tisch nach Anspruch 14, **dadurch gekennzeichnet, dass** das Batteriegehäuse (23) ein unteres Sockelteil eines Stehtisches (1) mit einem Tischbein (18) als Standvorrichtung bildet.

16. Tisch nach Anspruch 14 oder Anspruch 15, **dadurch gekennzeichnet, dass** die Batterieanordnung (25) über eine vorzugsweise verschließbare Wartungsklappe und/oder Wartungstüre (24) im Batteriegehäuse (23) in der Standvorrichtung (18, 19, 20) zugänglich ist.

17. Tisch nach Anspruch 13, **dadurch gekennzeichnet, dass** die Stromversorgung extern über einen Netzanschlussstecker (26) erfolgt.

18. Tisch nach einem der Ansprüche 9 bis 17, **dadurch gekennzeichnet, dass** am unteren Bereich des Tischbeins (18) eine flächige Platte als Aufstandsplatte (28) oder vorzugsweise drei voneinander beabstandete Stützfüße (29) angeordnet sind.

19. Tisch nach einem der Ansprüche 9 bis 18, **dadurch gekennzeichnet, dass** das Tischbein (18) teleskopartig und damit höhenverstellbar aus wenigstens zwei Teleskoprohrteilen aufgebaut ist.

20. Tisch nach einem der Ansprüche 1 bis 19, **dadurch gekennzeichnet,**
**dass** die Tischplatte (2) aus Glas, vorzugsweise aus Acrylglas und/oder Hartglas und/oder Sicherheitsglas, und/oder Kunststoff hergestellt ist, und

21. Tisch nach einem der Ansprüche 1 bis 20, **dadurch gekennzeichnet, dass** das wenigstens eine Motiv (3) auf einer in einer Gebrauchsstellung oberen Seite (16) der Tischplatte (2) aufgebracht ist.

22. Tisch nach einem der Ansprüche 1 bis 21, **dadurch gekennzeichnet, dass** das wenigstens eine Motiv (3) in die Tischplatte (2) eingefräst oder durch Bedrucken, vorzugsweise im Siebdruckverfahren, auf die Tischplatte (2) aufgebracht ist.

23. Tisch nach einem der Ansprüche 20 bis 22, **dadurch gekennzeichnet, dass** die Tischplatte (29) oberflächen- und/oder kratzvergütet ist.

24. Tisch nach einem der Ansprüche 1 bis 23, **dadurch gekennzeichnet, dass** die Einfassung (4; 30) und/oder die wenigstens eine Standvorrichtung (18, 19, 20) aus Messing und/oder Aluminium und/oder Stahl, vorzugsweise Edelstahl, gegebenenfalls unter Verzinken hergestellt oder beschichtet ist.

25. Tisch nach einem der Ansprüche 1 bis 24, **dadurch gekennzeichnet, dass** die Lichtquelle über eine Zeitschaltung gesteuert aktivierbar und deaktivierbar ist.
